Europäisches Patentamt

European Patent Office

Office européen des brevets

(19)

(11) Publication number: **0 425 077 A2**

# EUROPEAN PATENT APPLICATION

(21) Application number: **90308356.6**

(22) Date of filing: **30.07.90**

(51) Int. Cl.⁵: **G06F 15/74**

(30) Priority: **26.10.89 US 426827**

(43) Date of publication of application:
**02.05.91 Bulletin 91/18**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Bednarek, Thomas Eugene**
**7215 Gumwood Lane**
**Raleigh, NC 27615(US)**
Inventor: **Romesburg, John R.**
**1067 Fieldstone Drive**
**N. Huntingdon, PA 15642(US)**

(74) Representative: **van Berlyn, Ronald Gilbert**
**23, Centre Heights**
**London, NW3 6JG(GB)**

(54) **System enabling control information display format changes during on-line control of a plant or process.**

(57) A method and apparatus for operating a plant while generating a display that contains information relating to the plant, and that can be changed in format during plant operation without adversely affecting the plant operation, the display being composed of a display format and a readable representation of the value of at least one selected parameter of the process (8), the representation having a defined position in the display, by:

providing a first database (2) containing information defining the display format and identifying the selected parameter of the process (8);

providing a second database (4) in the form of a memory having a plurality of addressable locations, with one of the locations being associated with the selected parameter;

storing a representation of the value of the selected parameter in the second database (4) memory location associated with the selected parameter;

retrieving (16) from the second database (4) the representation of the value stored in the location associated with the selected parameter; and

combining (18) the information defining the display format with the representation retrieved in the retrieving step and using the combined information and representation to generate the display.

# SYSTEM ENABLING CONTROL INFORMATION DISPLAY FORMAT CHANGES DURING ON-LINE CONTROL OF A PLANT OR PROCESS

The present invention relates to a method and system operating an industrial plant or process while enabling control information displays, to undergo format changes during the on-line control of the plant or process.

The control of complex processes generally requires the acquisition of a quantity of data reflecting the current state of the process, and the use of such data to adjust various process input parameters. In order to permit adequate supervision and control of such processes, the acquired data must be displayed, on an on-line basis, to operators.

Plant operation and control frequently creates a need for the information display format to be changed while the process or plant continues to run. A change in format may involve a change in the manner in which data is arranged on the display or a change in the type of data which is being displayed.

Heretofore, it has typically been the practice to incorporate all display instructions in the process program itself. Thus, when it has been found necessary to alter the display format, especially in the cases of newly developed programmed process control systems, it has been necessary to shut down the process, identify the appropriate system or program modules, modify and then recon struct or recompile the modules, and finally restart the process. This procedure has had to be followed because the message and information formats for operator display have customarily been embedded in various system or program modules associated with control of the process. Changes to such message and display formats require access to the actual code in the case of program modules, resulting in the drawbacks noted above, in addition to the real danger that the process control itself may become inadvertently modified. Intensive and costly testing then typically is required to confirm that the control still performs as intended.

In accordance with the present invention, a system control or operating method responding to system parameter signals in accordance with predetermining control logic and algorithmic operations to control and operate the system in a predetermined manner, and system information display is simultaneously operated to display system information and to enable the format, such display to be changed on-line without adversely affecting plant control or operation.

The display is composed of a display format and a readable representation of the value of at least one selected system feedback parameter of the process, the representation having a defined position in the display, the display being generated by: providing a first database containing information defining the display format and identifying the selected system parameter of the plant or process; providing a second database in the form of a memory having a plurality of addressable locations, with one of the locations being associated with the selected system parameter; storing a representation of the value of the selected system parameter in the second database memory location associated with the selected system parameter; retrieving from the second data base the representation of the value stored in the location associated with the selected system parameter; and combining the information defining the display format with the system parameter representation and using the combined information and representation to generate the display.

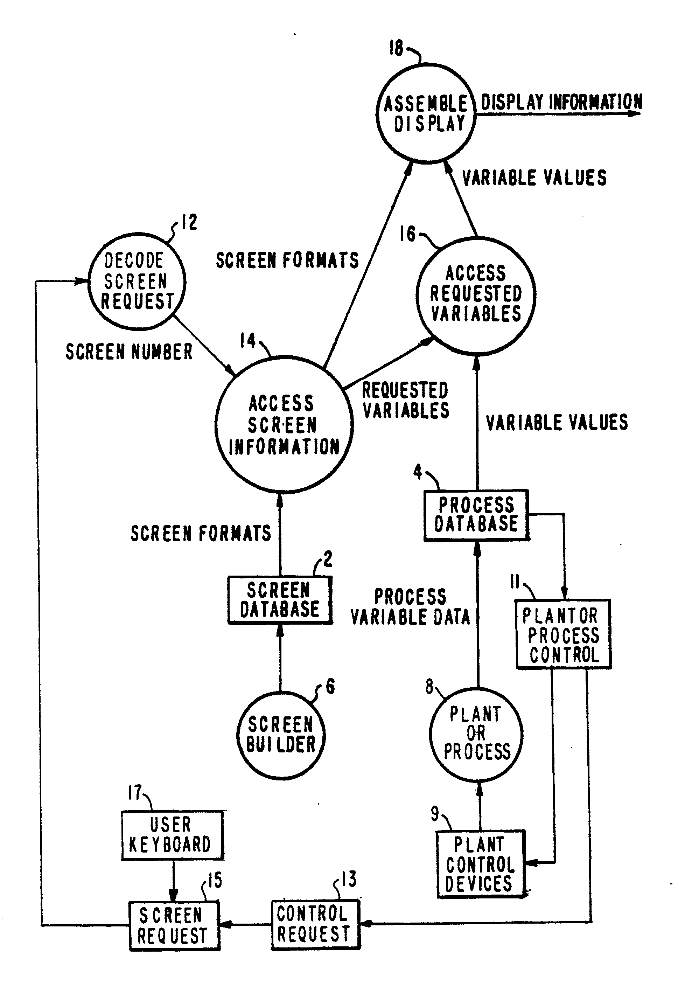

The sole figure is a data flow diagram illustrating the operation of a system according to the present invention.

As shown in the figure, a plant or process 8 such as an electric generating plant, includes various equipment items that are operated control devices 9 which in turn are operated by a control 11 which may, as an example, be a computer control that is programmed in accordance with predetermined logic and control algorithms to operate the plant in a predetermined manner. Plant or process signals are coupled to the control 11 through a process database 4.

As further shown in the figure, a pair of inputs to a display system are generated by a screen database 2 and the process database 4.

Screen database 2 contains all information needed to construct a display, including any borders, dividing lines, graphics, titles and legends which are the elements of a display that are independent of the process parameter values which are to be displayed. In addition, database 2 contains data identifying process parameters whose values are to be part of a display and their locations on a display, the data being in a form which enables display formats and information to be changed while the process being monitored continues to run.

Database 2 may contain information for a plurality of selectable screen displays and the information for a given display. can be generated by a "screen builder" module 6 which allows a user to design the format and process parameter content of a display and to modify displays which were previously created and stored in database 2. As a result, new display formats can be developed as the need becomes apparent during operation of the plant 8.

Process database 4 receives process parameter values from the plant or process 8 being monitored and controlled. These values may be updated at any desired frequency. The current value for each process parameter is stored at a designated memory location of the process database 4.

In accordance with the present invention, the data identifying process parameters are stored in database 2 in the form of variables designating the locations in database 4 where the current process values are stored. Each variable may additionally provide format information relating to the display of the associated parameter value, including the text style, size and location on the display.

Each display format, also known as a screen, is assigned a screen number and a signal identifying the screen number to be displayed is supplied from a keyboard or the process control or control program and this signal is converted, in a "decode screen signal" module 12, into a code which informs the display system of the desired screen number.

The screen number code is supplied to an "access screen information" module 14 which is operative to access the screen database 2 in order to retrieve all format and other information associated with the screen identified by the screen number code supplied by the module 12.

In addition, the module 14 separates the screen format information, i.e., the information used to form borders, dividing lines, graphics, titles, legends, and the memory location of each process parameter value to be displayed, from the process parameter information.

The process parameter information is supplied to an "access requested variables" module 16 in which the current value of each parameter, i.e., the value stored in each memory location corresponding to a process parameter, associated with the selected screen is retrieved and sent to an "assembly display" module 18 together with the screen format information from the module 14.

In the module 18, the screen format information is combined with the current process parameter values and the combined information is sent to a designated display terminal or terminals.

While the plant is running and plant or process parameter values are being displayed, the selected display format, or screen, can be changed, and the value stored for each process parameter can be independently varied by the control 11 while the plant 8 continues to be operated by the control 11. Thi.s is possible because the stored screen information is independent of the current parameter values.

The invention may be implemented with the use of three computer systems, Hewlett Packard 1000, Model A700 systems having been employed in one implementation of the invention. The system was networked together using Hewlett Packard network hardware and software and the Hewlett Packard RTE/A operating system. One system controls the plant or process 8, a second system collects data, monitors the plant or process and supplies process data to the first system, and the third system accepts data from the second system and processes the data for report generation and archiving.

In a relatively simple embodiment of the invention, the operating program need only be provided with screen numbers which will be delivered to the display program at selected times. This allows independent development, verification and maintenance of the operating programs and the display system.

The screen builder module 6 is typically in the form of an editor which causes each screen display to be constituted by a numbered block which can be created or edited. Each block contains all of the information needed for a single display and typically, a block may correspond to a display containing 20 lines and 78 columns. Routines can be written to access these data segments by single block and line numbers.

Since the file containing all screen information, i.e., screen database 2, is not directly associated with the source code of the process operating program, the screen data base can be modified independently of the operating program. Therefore, a user can alter the information associated with any display without in any way affecting the source or executable versions of the plant or process operating program. Consequently, any changes in the display information cannot introduce errors into the plant process operating program.

Another advantage of the invention resides in the independent nature of the display information file. Changes to displays can be made while the control program continues to run. Thus, the operating program can be set into operation and, while it continues to control the plant or process, and based on experience obtained during running of the plant or process, screen displays can be altered without taking the entire system off-line. This feature is extremely valuable when working with process operating programs which control a physical process on a real-time basis, such as reactor vessel thermal annealing. If it were otherwise necessary to halt the process operating program in order to modify screen displays, a considerable delay would be incurred during which the reactor vessel must be permitted to cool down at a controlled rate before the process can be shutdown.

The present invention further enables a time-related record of changes in the screen information file to be maintained. By obtaining a list of these records with their associated time stamps before making any modifications, an audit of the state of the message file can be performed at anytime.

## Claims

1. A method for operating a plant or process while generating a selectable plant information display without adversely affecting the plant operation when display format selections are changed, the plant being operated by a control and generating feedback variable data, the display being composed of a display format and a readable representation of the value of at least one selected parameter of the plant, the representation having a defined position in the display, said method characterized by the steps of:
providing a first database containing information defining the display format and identifying the selected parameter of the process;
providing a second database having a plurality of addressable memory locations, with one of the locations being associated with the selected parameter;
storing a representation of the value of the selected parameter in the second database memory location associated with the selected parameter;
retrieving from the second database the representation of the value stored in the location associated with the selected parameter; and
combining the information defining the display format with the representation retrieved in said retrieving step and using the combined information and representation to generate the display.

2. A method as defined in claim 1 wherein said step of retrieving comprises interrogating the second database by the information in the first database which identifies the selected parameter.

3. A method as defined in claim 2 for generating any selected one of a plurality of displays each having a respective display format, wherein the first database contains information defining each of the displays, and comprising the further step of selecting one of the displays and performing said step of combining on the basis of the selected display.

4. A method as defined in claim 2 or 3, wherein the selected process parameter is at least periodically monitored, said method further periodically updating the second database with the current value of the selected process parameter.

5. A method as defined in claim 4, including the further step of changing the display selected from the first database as the plant or process continues to be controlled by said control.

6. A method as defined in claim 4 comprising the further step of creating a new display format and adding information defining the new display format to the first database while the plant or process continues to be controlled by said control.

7. Apparatus for operating a plant or process while generating a selectable plant reformation display without adversely affecting the plant operation when display format selections are changed, display being composed of a display format and a readable representation of the value of at least one selected parameter of the plant, the representation having a defined position in the display, said apparatus characterized by:
means providing a first database containing information defining the display format and identifying the selected parameter of the process;
means providing a second database having a plurality of addressable memory locations, with one of the locations being associated with the selected parameter;
means for storing a representation of the value of the selected parameter in the second database memory location associated with the selected parameter;
means for retrieving from the second database the representation of the value stored in the location associated with the selected parameter; and
means connected to said first database and to said retrieving means for combining the information defining the display format with the representation retrieved by said means for retrieving and using the combined information and representation to generate the display.

8. Apparatus as defined in claim 7, wherein said means for retrieving comprises means for interrogating the second database by the information in the first database which identifies the selected parameter.

9. Apparatus as defined in claim 8 for generating any selected one of a plurality of displays each having a respective display format, wherein said first database contains information defining each of the displays, and further comprising means for selecting one of the displays and controlling said means for combining on the basis of the selected display.

10. Apparatus as defined in claim 8 or 9, wherein the selected process parameter is at least periodically monitored, wherein said means for storing a representation are operative for periodically updating said second database with the current value of the selected process parameter.

11. Apparatus as defined in claim 10 further comprising means for changing the display selected from the first database as the plant continues to be controlled by said control.

12. Apparatus as defined in claim 10 further comprising means for creating a new display format and adding information defining the new display format to said first database while the plant or process continues to be controlled by said control.